# EUROPEAN PATENT SPECIFICATION

(11) **EP 4 067 168 B1**
(45) Date of publication and mention of the grant of the patent: **25.06.2025**
(21) Application number: 21895975.7
(22) Date of filing: 25.11.2021
(51) Int. Cl.: B60Q 1/04, B60Q 1/14, F21S 41/148, F21S 41/19, F21S 41/33, F21S 41/39, F21S 45/48, F21W 102/13, B60Q 1/068, F21W 102/155

(54) **STRUCTURAL ARRANGEMENT APPLIED TO A VEHICLE HEADLAMP**
AN EINEM FAHRZEUGSCHEINWERFER ANGEBRACHTE STRUKTURANORDNUNG
AGENCEMENT STRUCTURAL D'UN PHARE DE VÉHICULE

(30) Priority: 26.11.2020 BR 202020024178 U
(43) Date of publication of application: 05.10.2022
(73) Proprietor: Balbinot, Mauricio, 95076-100 Caxias do Sul (BR)
(72) Inventor: Balbinot, Mauricio, 95076-100 Caxias do Sul (BR)
(74) Representative: Pereira Garcia, João Luís
(86) International application number: PCT/BR2021/050518
(87) International publication number: WO 2022/109703

(56) References cited:
- BR-U2- 202015 003 427
- CN-B- 106 287 488
- DE-A1- 102016 120 431
- JP-A- 2018 137 125
- US-A1- 2014 347 875
- US-A1- 2016 131 324
- US-A1- 2019 383 460
- US-B1- 10 704 759

## Description

### FIELD OF APPLICATION

The present invention describes a structural arrangement in a vehicle headlight. More specifically, it comprises a compact headlight, composed of an electronic circuit, with a set of LEDs, mounted close together and using a single indirect projection reflector to serve more than one function, in this case the low and high beam functions without any additional components.

This new constructive form makes it possible for the LEDs to work interchangeably, that is, while one is on, the other is off, so that when one of the LEDs is activated, it serves the low beam function, and the other LED, when activated, serves the high beam function.

In addition, this constructive form makes it possible for the LEDs to work in a combined way, if it is necessary to meet a specification or a specific need of the user or market segment.

### BACKGROUND

The constant technological advance provides the electronic components industry with the development of increasingly compact items with technical specifications equal to or even superior to previous versions. Among them, we can highlight LEDs, which over the years are getting smaller, with a smaller light-emitting area, but with greater power and less thermal heating (heat generation).

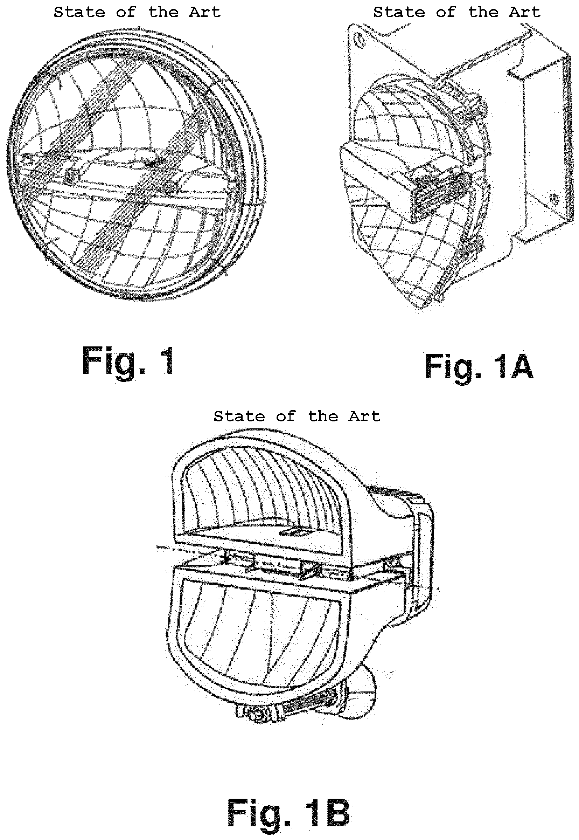

Currently, vehicle headlights with more than one function and with an indirect projection reflector system have a configuration provided with a reflector and an LED, or a set of LEDs, dedicated to each function, that is, each reflector has its specific project for the function to be fulfilled, as we can analyze in Figures 1, 1A and 1B.

In other cases, the headlights have two reflectors, each with its set (more than 1) of LEDs, so that the reflectors work together, that is, the low beam or high beam function is performed by the set of two reflectors, and never individually.

Thus, the current constructive form applied to vehicle headlights results in a larger product and, consequently, higher cost due to the greater amount of material and components involved.

In addition, the electronic board fastening system is performed using a screw or glue next to the housing, which generates some inconveniences in the assembly process due to the difficulty of positioning and alignment, since the optical assembly needs to be well positioned in relation to the board so that the headlight has the necessary efficiency.

Thus, the present inventor, seeking to solve the inconveniences of the market, developed a compact constructive form provided with a single reflector that allows to meet the high and low beam functions. In addition, it has a system of easy fitting and positioning of the board next to the reflector, which prevents failures and increases efficiency in the assembly process.

In research carried out in the state of the art, we identified several documents that claim constructive forms applied to vehicle headlights, where we can highlight the following documents:
Documents BR202013017528-0, BR202015003424-0 and BR202015003427-5, by the same owner, describe constructive forms applied to vehicle headlights so that each document has its own constructivity for a specific function. Thus, the matter claimed in the present application seeks to improve the high and low functions described previously in these documents, thus improving the constructive form and application of the headlight.

Document EP2906444 (Rebo. 20120) describes a vehicle headlight system having a headlight module and a processor. The beacon module may include a light source and a reflector. The light source may include a plurality of light emitters which may be individually controlled by the processor. The reflector may include a plurality of facets to reflect light received from the light source. The headlight module is capable of switching between high and low beam without mechanically moving components.

This document cited in the state of the art describes a headlight that allows switching between high and low, but this headlight has a complex constructivity that uses a processor to change this light beam, in addition to describing the curve light functions, which leads to a greater number of components. On the other hand, the product claimed by the present inventor does not use the processor, so the switching between the high and low function is performed by energizing the connector pins. In addition, the product does not perform other functions, thus being dedicated only to switching the beam of light between high and low, resulting in a compact and much more efficient headlight.

Document JP2018137125 also discloses a vehicular lamp made with a reduced number of components and a simpler assembling process. The vehicular lamp comprises: a light source; a board having the light source mounted on one surface side; a heat sink; and a reflector. Further vehicular lamp is known from US2014347875 A1.

Therefore, the present inventor, seeking to improve and perfect vehicle headlights, developed a new compact constructive form, of reduced dimensional, which allows to fulfill the high and low beam functions without any additional component, through a single reflector assembled together with an electronic circuit provided with LEDs.

Therefore, the object of this invention is a structural arrangement in a vehicle headlight that comprises a compact headlight, composed of an electronic circuit, with a set of LEDs, mounted close together and using a single indirect projection reflector to serve more than one function, in this case the low beam and high beam functions without any additional components. This new constructive form makes it possible for the LEDs to work interchangeably, that is, while one is on, the other is off, so that when one of the LEDs is activated, it serves the low beam function, and the other LED, when activated, serves the high beam function. In addition, the set has a system for easy fitting and positioning of the electronic board next to the reflector through pins and towers, ensuring quick assembly and correct positioning between the components.

### SUMMARY

Such characteristics allow for a product with reduced dimensions and with greater efficiency in switching between high and low beams, when compared to the documents of the state of the art.

A characteristic of the invention is a structural arrangement in a vehicle headlight that provides a circular-shaped housing, internally provided with a smooth-faced shoulder provided with channels for positioning and locking the reflector.

A characteristic of the invention is a structural
arrangement in vehicle headlight that provides a reflector that presents a concave faceted body provided in its upper portion with a smooth-faced recess that presents fixing towers, positioning pins and an opening for the LEDs.

A characteristic of the invention is a structural
arrangement in a vehicle headlight that provides a board with a pair of holes, a pair of smaller-sized holes and LEDs positioned in the central portion between the holes.

A characteristic of the invention is a structural
arrangement in vehicle headlight that provides a board that is positioned next to the recess of the reflector through the fitting of the holes next to the towers and pins next to the holes.

A characteristic of the invention is a structural
arrangement in a vehicle headlight that provides a reflector provided with the board positioned next to the housing through the fitting of the towers together with the channels and fixed by screws positioned in the upper portion of the housing and connected together with the towers.

A characteristic of the invention is a structural
arrangement in a vehicle headlight that provides a board positioned between the housing shoulder and the reflector recess so that its fixation occurs by tightening pressure through the screws.

A characteristic of the invention is a structural
arrangement in vehicle headlight that provides that the positioning pins and the towers allow to properly position the board in relation to the reflector and at the same time the fixation and thermal dissipation through the housing.

A characteristic of the invention is a structural
arrangement in a vehicle headlight that provides a housing with a single reflector interconnected with a board and indirect projection LEDs to meet the high and low function.

### DESCRIPTION OF DRAWINGS

Figures 1, 1A and 1B are the views of vehicle headlights with more than one function and with an indirect projection reflector system, currently used in the state of the art.

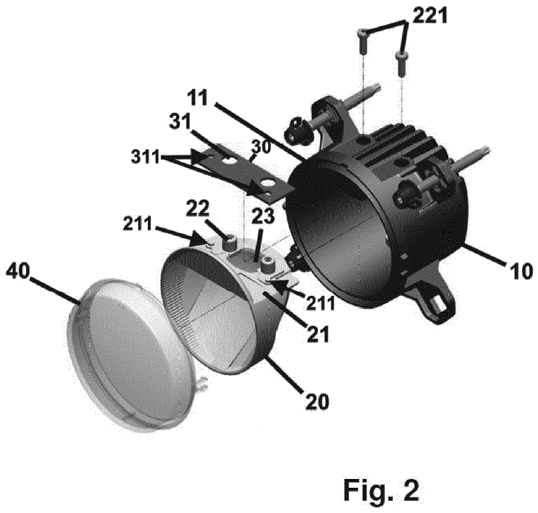

Figure 2 is an exploded perspective view of the vehicle headlight, detailing its internal components and fastening means.

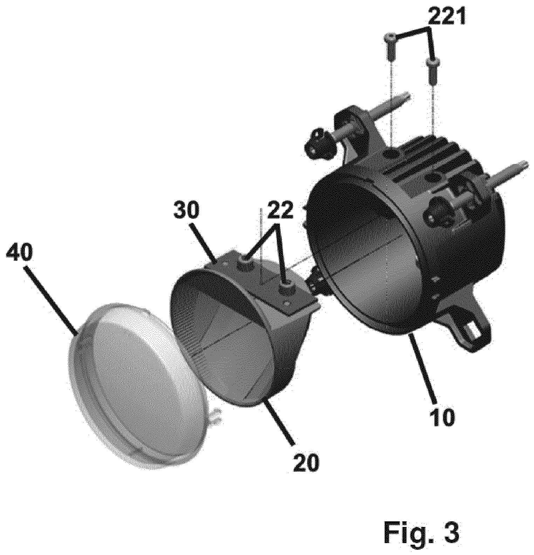

Figure 3 is an exploded perspective view of the vehicle headlight, detailing the electronic board fitted and perfectly positioned in the reflector through the pins.

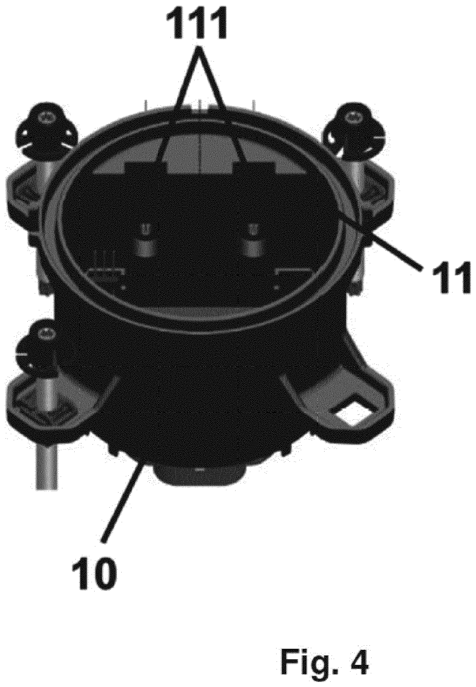

Figure 4 is a perspective view of the housing, detailing the shoulder and channels for positioning and fixing the reflector.

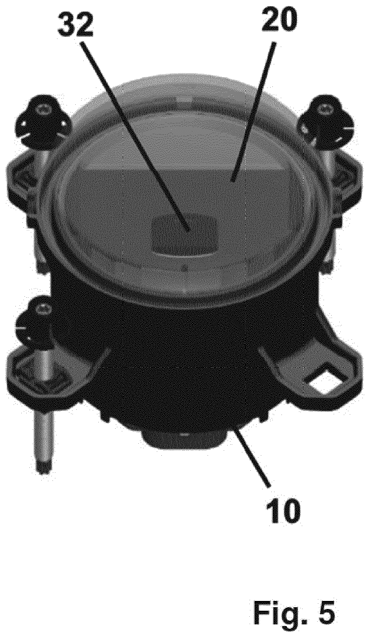

Figure 5 is a perspective view of the assembled headlight, detailing the positioning of the LED board next to the reflector.

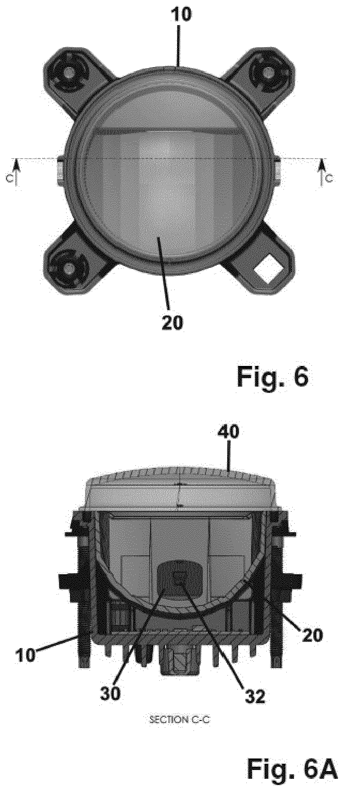

Figure 6 is a front view of the assembled headlight and Figure 6A is a sectional view of the headlight, detailing the positioning of the LED board next to the reflector.

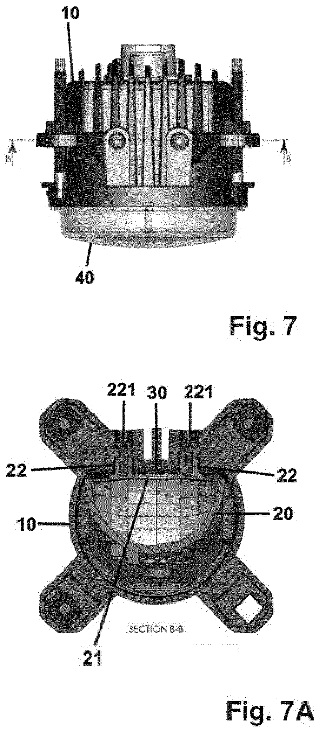

Figure 7 is a top view of the headlight and Figure 7A is a sectional view detailing the fastening means between the housing, board and reflector, demonstrating the positioning of the LED board.

### DETAILED DESCRIPTION

The structural arrangement in vehicle headlight object of the present invention comprises a housing (10)
that internally receives a reflector (20) interconnected to an LED board (30) and a translucent closing lens (40).

The housing (10), of circular shape, is provided internally with a smooth-faced shoulder (11) provided with channels (111) that allow the positioning and locking of the reflector (20).

The reflector (20) has a faceted concave body provided in its upper portion with a smooth-faced recess (21) that has fixing towers (22), positioning pins (211) of the board in the reflector and an opening (23) that enables the emission of light beams on the faceted structure of the reflector.

The positioning pins (211) and the towers (22) ensure the perfect positioning of the board (30) in relation to the reflector (20) and at the same time the fixation and thermal dissipation through the housing (10).

The board (30) is provided with a pair of holes (31), a pair of holes (311) of smaller dimension and LEDs (32) positioned in the central portion between the holes (31), so that the board (30) is positioned next to the recess (21) of the reflector through the fitting of the holes (31) together with the towers (22) and pins (211) together with the holes (311), allowing the positioning of the LEDs (32) next to the drilling (23) of the reflector (20).

The reflector (20) provided with the board (30) is then positioned next to the housing (10) through the fitting of the towers (22) together with the channels (111), so that after fitting, the assembly is fixed by screws (221) positioned in the upper portion of the housing (10) and connected together with the towers (22).

The board (30) is positioned between the shoulder (11) of the housing (10) and the recess (21) of the reflector (20) so that its fixation occurs by tightening pressure through the screws (221).

The board (30) is positioned precisely through the holes (31) and the towers (22), which ensures greater efficiency and minimizes errors in the assembly of the product, in addition to ensuring the perfect alignment that ensures the optics and photometry.

This quick assembly and fastening system between the board (30), reflector (20) and housing (10) ensures the correct positioning between the components. In addition, this assembly system contributes to the thermal dissipation of the board (30), as it is in direct contact with the housing (10) which is in contact with the external environment, favoring thermal exchange.

## Claims

1. A STRUCTURAL ARRANGEMENT IN VEHICLE HEADLIGHT comprising a housing (10), of circular shape, internally provided with a smooth-faced shoulder (11) provided with channels (111) for positioning and locking the reflector (20) which has a faceted concave body provided in its upper portion with a smooth-faced recess (21) that has fixing towers (22), positioning pins (211) of the board (30) and an opening (23) for the LEDs, said board (30) being provided with a pair of holes (31), a pair of holes (311) of smaller dimension and LEDs (32) positioned in the central portion between the holes (31), so that the board (30) is positioned next to the recess (21) of the reflector by fitting the holes (31) together with the towers (22) and the positioning pins (211; together with the holes of smaller dimension (311); the reflector (20) provided with the board (30) is positioned next to the housing (10) through the fitting of the towers (22) together with the channels (111) and fixed by screws (221) positioned in the upper portion of the housing (10) and connected together with the towers (22); the board (30) is positioned between the shoulder (11) of the housing (10) and the recess (21) of the reflector (20) so that its fixation occurs by tightening pressure through the screws (221).

2. STRUCTURAL ARRANGEMENT IN VEHICLE HEADLIGHT, according to claim 1, wherein the positioning pins (211) and the towers (22) properly position the board (30) in relation to the reflector (20) and at the same time enable the fixation and thermal dissipation through the housing (10).

3. STRUCTURAL ARRANGEMENT IN VEHICLE HEADLIGHT, according to any one of the previous claims, wherein it comprises the housing (10) provided with the single reflector (20) interconnected with the board (30) and LEDs (32) of indirect projection to meet the high and low functions.

## Patentansprüche

1. STRUKTURANORDNUNG IN FAHRZEUGSCHEINWERFER, die ein Gehäuse (10) in Kreisform umfasst, das intern mit einer glatten Schulter (11) versehen ist, die mit Kanälen (111) zum Positionieren und Verriegeln des Reflektors (20) versehen ist, der einen facettierten konkaven Körper aufweist, der in seinem oberen Abschnitt mit einer glatten Ausnehmung (21) versehen ist, die Befestigungstürme (22), Positionierungsstifte (211) der Platine (30) und eine Öffnung (23) für die LEDs aufweist, wobei die Platine (30) mit einem Paar Löcher (31), einem Paar Löcher (311) kleinerer Dimension und LEDs (32) versehen ist, die im Mittenabschnitt zwischen den Löchern (31) positioniert sind, derart, dass die Platine (30) durch Zusammensetzen der Löcher (31) mit den Türmen (22) und der Positionierungsstifte (211) mit den Löchern kleinerer Dimension (311) neben der Ausnehmung (21) des Reflektors positioniert ist; wobei der mit der Platine (30) versehene Reflektor (20) durch das Zusammensetzen der Türme (22) mit den Kanälen (111) neben dem Gehäuse (10) positioniert und mit Schrauben (221) befestigt ist, die im oberen Abschnitt des Gehäuses (10) positioniert und mit den Türmen (22) verbunden sind; die Platine (30) zwischen der Schulter (11) des Gehäuses (10) und der Ausnehmung (21) des Reflektors (20) positioniert ist, derart, dass ihre Befestigung über einen Anziehdruck durch die Schrauben (221) erfolgt.

2. STRUKTURANORDNUNG IN FAHRZEUGSCHEINWERFER nach Anspruch 1, wobei die Positionierungsstifte (211) und die Türme (22) die Platine (30) mit Bezug auf den Reflektor (20) korrekt positionieren und gleichzeitig die Befestigung und die Wärmeableitung durch das Gehäuse (10) ermöglichen.

3. STRUKTURANORDNUNG IN FAHRZEUGSCHEINWERFER, nach einem der vorhergehenden Ansprüche, wobei sie das Gehäuse (10) umfasst, das mit dem einzelnen Reflektor (20) versehen ist, der an die Platine (30) und die LEDs (32) indirekter Projektion gekoppelt ist, um die hohe und die niedrige Funktion zu erfüllen.

## Revendications

1. AGENCEMENT STRUCTUREL DANS UN PHARE DE VÉHICULE comprenant un boîtier (10), de forme circulaire, muni intérieurement d'un épaulement à surface lisse (11) muni de canaux (111) pour le positionnement et le blocage du réflecteur (20) qui a un corps concave à facettes muni dans sa partie supérieure d'un renfoncement à surface lisse (21) qui a des tours de fixation (22), des goupilles de positionnement (211) de la plaque (30) et d'une ouverture (23) pour les diodes électroluminescentes, ladite plaque (30) étant munie d'une paire de trous (31), d'une paire de trous (311) de plus petite dimension et de diodes électroluminescentes (32) positionnées dans la partie centrale entre les trous (31), de manière à ce que la plaque (30) soit positionnée à côté du renfoncement (21) du réflecteur en emboîtant les trous (31) conjointement avec les tours (22) et les goupilles de positionnement (211) conjointement avec les trous (311) de plus petite dimension ; le réflecteur (20) muni de la plaque (30) étant positionné à côté du boîtier (10) à travers l'emboîtement des tours (22) conjointement avec les canaux (111) et fixé par des vis (221) positionnées dans la partie supérieure du boîtier (10) et reliées conjointement avec les tours (22) ; la plaque (30) étant positionnée entre l'épaulement (11) du boîtier (10) et le renfoncement (21) du réflecteur (20) de manière à ce que sa fixation se fasse par pression de serrage à travers les vis (221).

2. AGENCEMENT STRUCTUREL DANS UN PHARE DE VÉHICULE, selon la revendication 1, dans lequel les goupilles de positionnement (211) et les tours (22) positionnent correctement la plaque (30) par rapport au réflecteur (20) et permettent en même temps la fixation et la dissipation thermique à travers le boîtier (10).

3. AGENCEMENT STRUCTUREL DANS UN PHARE DE VÉHICULE, selon l'une quelconque des revendications précédentes, dans lequel il comprend le boîtier (10) muni du réflecteur (20) unique relié ensemble avec la plaque (30) et les diodes électroluminescentes (32) de projection indirecte pour répondre aux fonctions haute et basse.
